(19) Europäisches Patentamt
European Patent Office
Office européen des brevets

(11) **EP 2 507 600 B1**

(12) **EUROPÄISCHE PATENTSCHRIFT**

(45) Veröffentlichungstag und Bekanntmachung des Hinweises auf die Patenterteilung:
**22.01.2020 Patentblatt 2020/04**

(21) Anmeldenummer: **10779312.7**

(22) Anmeldetag: **16.11.2010**

(51) Int Cl.:
*G01J 3/26* *(2006.01)*       *G02B 26/00* *(2006.01)*

(86) Internationale Anmeldenummer:
**PCT/EP2010/067603**

(87) Internationale Veröffentlichungsnummer:
**WO 2011/067110 (09.06.2011 Gazette 2011/23)**

(54) **VERFAHREN ZUR KLASSENEINTEILUNG STRAHLUNGSEMITTIERENDER, OPTOELEKTRONISCHER HALBLEITERBAUELEMENTE**

METHOD FOR CLASSIFYING RADIATION EMITTING OPTOELECTRONIC SEMICONDUCTOR DEVICES

PROCÉDÉ DE CLASSIFICATION D'UN COMPOSANT ÉMETTEUR DE RAYONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2009 DE 102009056665**

(43) Veröffentlichungstag der Anmeldung:
**10.10.2012 Patentblatt 2012/41**

(73) Patentinhaber: **OSRAM Opto Semiconductors GmbH**
**93055 Regensburg (DE)**

(72) Erfinder:
• **MICHEL, Felix**
**81669 München (DE)**
• **MUSCHAWECK, Julius**
**82131 Gauting (DE)**
• **NIEBELSCHÜTZ, Merten**
**93073 Neutraubling (DE)**

(74) Vertreter: **Epping - Hermann - Fischer Patentanwaltsgesellschaft mbH**
**Schloßschmidstraße 5**
**80639 München (DE)**

(56) Entgegenhaltungen:
EP-A1- 1 462 711        WO-A1-2009/014219
DE-A1- 10 216 395      US-A1- 2008 297 028
US-A1- 2008 297 054

• anonymous: "Binning and Labeling", , 13. September 2008 (2008-09-13), XP002651926, Gefunden im Internet: URL:http://web.archive.org/web/20080913073844/http://www.cree.com/products/pdf/XLamp7090XR-E_B&L.pdf [gefunden am 2011-07-15]
• ANSI: "C78.377-2008 Specifications for the Chromaticity of Solid State Lighting Products" In: 2008, American National Standard Lighting Group, XP002651927, Seiten 1-17, das ganze Dokument

**Beschreibung**

Es wird ein Verfahren zur Klasseneinteilung von strahlungsemittierenden, optoelektronischen Halbleiterbauelementen angegeben. Bei dem strahlungsemittierenden, optoelektronischen Halbleiterbauelement kann es sich beispielsweise um eine Lumineszenzdiode, also um eine Laserdiode oder eine Leuchtdiode handeln.

In vielen Einsatzbereichen von strahlungsemittierenden, optoelektronischen Halbleiterbauelementen werden durch Normen genau definierte Lichtfarben vorgegeben. Bedingt durch den Herstellungsprozess können bei strahlungsemittierenden, optoelektronischen Halbleiterbauelementen eines Typs und Herstellers Farbunterschiede im direkten Vergleich auffallen. Es ist daher oft notwendig, die strahlungsemittierenden, optoelektronischen Halbleiterbauelemente in voneinander abgestufte Klassen (englisch: bins) einzuteilen, also eine Klasseneinteilung (englisch: binning) vorzunehmen.

Es existieren bereits zahlreiche genormte Systeme zur Klasseneinteilung.

Die Druckschrift US 6,900,471 B1 beschreibt ein Verfahren zur Klasseneinteilung, bei dem blaue Farborte und Farborte, denen keine korrelierte Farbtemperatur zugeordnet werden kann, nicht zugänglich sind.

Ein weiteres bekanntes System zur Klasseneinteilung stellt beispielsweise die ANSI-Klasseneinteilung. Ein Vorteil dieses Klasseneinteilungssystems ist, dass es sich um ein standardisiertes Klasseneinteilungssystem handelt. Ferner sind die Klassen dieses Einteilungssystems auf die Planckkurve (auch Planck locus oder Black Body-Kurve) sowie die isothermen Judd-Linien gleicher korrelierter Farbtemperatur abgestimmt. Als negativ ist festzuhalten, dass die Klassen weder zu den Judd-Linien noch zur Planckkurve über den gesamten Bereich der Farbtemperatur zentriert sind. Ferner ist die Größe der einzelnen Klassen für Standard-LED-Anwendungen zu groß. Eine Unterteilung der Klassen in gleich große Unterklassen für eine feinere Klasseneinteilung ist nicht möglich. Schließlich deckt das ANSI-Klasseneinteilungssystem weder den gesamten Farbortbereich und noch nicht einmal den gesamten Farbortbereich, in dem eine korrelierte Farbtemperatur zugeordnet werden kann, ab. Eine zu lösende Aufgabe besteht nun darin, ein Verfahren zur Klasseneinteilung anzugeben, mit dem eine Großzahl unterschiedlicher strahlungsemittierender, optoelektronischer Halbleiterbauelemente konsistent in Klassen eingeteilt werden kann.

Diese Aufgabe wird durch ein Verfahren mit den Merkmalen von Anspruch 1 gelöst.

Gemäß zumindest einer Ausführungsform des Verfahrens zur Klasseneinteilung wird zunächst ein strahlungsemittierendes, optoelektronisches Halbleiterbauelement bereitgestellt. Bei dem Halbleiterbauelement handelt es sich beispielsweise um eine Laserdiode, einen Laserdiodenchip, eine Leuchtdiode oder einen Leuchtdiodenchip.

In einem nachfolgenden Verfahrensschritt wird der Farbort des vom strahlungsemittierenden, optoelektronischen Halbleiterbauelement im Betrieb emittierten Lichts ermittelt. Zur Bestimmung des Farbortes kommt zum Beispiel ein Spektralfotometer zur Verwendung.

Die Ermittelung des Farbortes kann dabei anhand eines beliebigen Farbraums erfolgen. Prinzipiell ist jeder Farbraum geeignet, um eine Farbe eindeutig durch ihren Farbort zu beschreiben. Um allerdings Vergleichbarkeit und Reproduzierbarkeit zu erreichen, wird der Farbort vorzugsweise in einem normierten Farbraum bestimmt. Beispielsweise kann der Farbort in einem der CIE-Farbraumsysteme oder in einem DIN-Farbraumsystem bestimmt werden.

In einem anschließenden Verfahrensschritt findet die Einteilung des strahlungsemittierenden, optoelektronischen Halbleiterbauelements in einem vorgegebenen Farbortbereich, also einer Klasse, statt, der den ermittelten Farbort umfasst.

Das verwendete Farbraumsystem wird dazu in Gruppen von Farbortbereichen unterteilt. Bei den vorgegebenen Farbortbereichen handelt es sich also um die Klassen, in die das strahlungsemittierende, optoelektronische Halbleiterbauelement eingeteilt werden kann. Die Einteilung erfolgt beispielsweise durch Vergleich des ermittelten Farbortes mit dem in die vorgegebenen Farbortbereiche unterteilten Farbraum und Zuordnung des strahlungsemittierenden, optoelektronischen Halbleiterbauelements zu dem vorgegebenen Farbortbereich, in dem der ermittelte Farbort des strahlungsemittierenden, optoelektronischen Halbleiterbauelements vorhanden ist.

Gemäß zumindest einer Ausführungsform des Verfahrens zur Klasseneinteilung wird der vorgegebene Farbortbereich dabei aus einer Gruppe von Farbortbereichen ausgewählt, wobei zumindest einer der Farbortbereiche aus der Gruppe von Farbortbereichen einen blauen Farbort umfasst. Das heißt, die vorgegebenen Farbortbereiche - also die Klassen oder Bins, welche zur Einteilung zur Verfügung stehen - umfassen zumindest einen Farbortbereich mit einem blauen Farbort, dem keine korrelierte Farbtemperatur zugeordnet werden kann.

In den oben beschriebenen herkömmlichen Systemen zur Klasseneinteilung sind Farbortbereiche mit blauem Farbort nicht zugänglich, da in diesen Systemen lediglich Farbortbereiche vorhanden sind, denen eine korrelierte Farbtemperatur zugeordnet werden kann. Das heißt, die Einteilung der strahlungsemittierenden, optoelektronischen Halbleiterbauelemente in diesen Systemen zur Klasseneinteilung endet am Hochtemperatur-Endpunkt der Planckkurve, also im bläulichweißen Farbort.

Bevorzugt wird der vorgegebene Farbortbereich aus einer Gruppe von Farbortbereichen ausgewählt, die den gesamten oder im Wesentlichen den gesamten Farbraum überspannen. Das heißt, mit den vorgegebenen Farbortbereichen aus der Gruppe von Farbortbereichen lässt sich der gesamte verwendete oder im Wesentlichen der gesamte verwendete Farbraum zusammensetzen, sodass jeder Farbort auch einem vorgegebenen Farbortbereich zugeordnet werden kann. Auf diese Weise ist es möglich, ganz unterschiedliche Halbleiterbauelemente - zum Beispiel farbige wie etwa rote, grüne, blaue oder gelbe Leuchtdioden, aber auch weiße Leuchtdioden - konsistent in Klassen einzuteilen. "Im Wesentlichen" der gesamte Farbraum heißt, dass kleine Bereiche des Farbraums - zum Beispiel im Magenta-farbigen Bereich des Farbraums - gegebenenfalls nicht zugänglich sind.

Gemäß zumindest einer Ausführungsform des Verfahrens wird zumindest einer der vorgegebenen Farbortbereiche aus der Gruppe von Farbortbereichen, also eine der möglichen Klassen, in die eine Einteilung stattfinden kann, von einer erweiterten Planckkurve geschnitten oder grenzt direkt an die erweiterte Planckkurve. Die erweiterte Planckkurve setzt die Planckkurve an ihrem Hochtemperatur-Endpunkt fort. Das heißt, die Planckkurve, die am Hochtemperatur-Endpunkt, an dem die Farbtemperatur gegen unendlich geht, endet, wird an diesem Punkt in den Bereich blauer Farborte hinein fortgesetzt.

Mit anderen Worten wird der verwendete Farbraum von einer zusammengesetzten Kurve durchzogen, die sich aus der erweiterten Planckkurve und der Planckkurve zusammensetzt. Zumindest einer, vorzugsweise manche der Farbortbereiche aus der Gruppe von Farbortbereichen, grenzt dann an die zusammengesetzte Kurve oder wird von der zusammengesetzten Kurve geschnitten. Die zusammengesetzte Kurve unterteilt den verwendeten Farbraum dabei bevorzugt in zwei getrennte Bereiche: einen Bereich oberhalb der Kurve und einen Bereich unterhalb der Kurve. Die zusammengesetzte Kurve erstreckt sich dazu von einem Rand des Farbraums zu einem gegenüberliegenden Rand des Farbraums. Das heißt, anders als die Planckkurve endet die zusammengesetzte Kurve nicht mitten im Farbraum.

Vorzugsweise wird die Planckkurve durch die erweiterte Planckkurve an ihrem Hochtemperatur-Endpunkt zumindest einmal stetig differenzierbar, also glatt, fortgesetzt. Das heißt, die zusammengesetzte Kurve ist am Hochtemperatur-Endpunkt der Planckkurve zumindest einmal stetig differenzierbar.

Es ist auch möglich, dass die zusammengesetzte Kurve an diesem Punkt zwei oder vielfach stetig differenzierbar ist.

Ist die zusammengesetzte Kurve zum Beispiel am Hochtemperatur-Endpunkt zweimal stetig differenzierbar, so ist die Größe der vorgegebenen Farbortbereiche besonders gleichmäßig, auch wenn die Farbortbereiche weit weg von der zusammengesetzten Kurve liegen. Das heißt über den gesamten Farbraum betrachtet springt die Größe der Farbortbereiche nicht oder kaum.

Dem hier beschriebenen Verfahren liegt dabei unter anderem die Erkenntnis zugrunde, dass der Hochtemperatur-Endpunkt (die korrelierte Farbtemperatur geht gegen unendlich) derjenige Punkt ist, der einen Farbraum physikalisch begründet in zwei Bereiche trennt: Farborte mit korrelierter Farbtemperatur und Farborte ohne korrelierte Farbtemperatur. Die Erweiterung beziehungsweise Verlängerung der Planckkurve in Richtung blauer Farborte ermöglicht nun auch eine Unterteilung von Bereichen des Farbraums, die herkömmlichen Klasseneinteilungssystemen nicht zugänglich sind.

Gemäß zumindest einer Ausführungsform des Verfahrens ist die erweiterte Planckkurve im CIE u'v' Farbraum ein zumindest quadratischer Spline. Das heißt, bei der erweiterten Planckkurve handelt es sich im CIE u'v' Farbraum um einen quadratischen Spline oder um einen Spline größerer Ordnung. Ein quadratischer Spline erweist sich zur Erweiterung der Planckkurve als besonders geeignet. Insbesondere erweist sich ein quadratischer Bezier-Spline als die einfachste und klarste Möglichkeit zur Erweiterung der Planckkurve in den Bereich blauer Farborte hinein. In anderen Farbräumen als dem CIE u'v' Farbraum kann die Transformation der erweiterten Plackkurve dann durch eine andere Funktion als einen Spline beschrieben sein. Eine Rücktransformation in den CIE u'v' Farbraum ergibt jedoch wieder den ursprünglichen Spline.

Zur Konstruktion insbesondere des quadratischen Splines werden drei Punkte benötigt.

Gemäß zumindest einer Ausführungsform des Verfahrens wird als ein Punkt zur Konstruktion des Splines der Hochtemperatur-Endpunkt Tu der Planckkurve gewählt. Auf diese Weise wird die Planckkurve am Hochtemperatur-Endpunkt stetig fortgesetzt.

Gemäß zumindest einer Ausführungsform des Verfahrens wird als ein Punkt P zur Konstruktion des Splines ein Punkt auf der Tangente an die Planckkurve am Hochtemperatur-Endpunkt gewählt. Dies ermöglicht, dass die zusammengesetzte Kurve am Hochtemperatur-Endpunkt stetig differenzierbar ist.

Zum Beispiel kann der Schnittpunkt der Tangente an die Planckkurve am Hochtemperatur-Endpunkt mit der Spektralfarblinie gewählt werden. Die Spektralfarblinie ist die Linie spektral reiner Farben, die einen Farbraum - beispielsweise den hufeisenförmigen CIE-Farbraum - umgrenzt. Das untere Ende des Farbraums wird dann durch die Purpurlinie eingefasst.

Gemäß zumindest einer Ausführungsform des Verfahrens wird als ein Punkt S zur Konstruktion des Splines ein Punkt auf der Spektralfarblinie gewählt. Dazu erweist sich ein Punkt mit einer Wellenlänge von wenigsten 360 nm und höchstens 410 nm, zum Beispiel der 380 nm-Punkt auf der Spektralfarblinie als sinnvoll. Zum Beispiel der 380 nm-Punkt ist dadurch ausgezeichnet, dass er die Spektralfarbe mit der geringsten Wellenlänge angibt, die vom menschlichen Auge noch wahrnehmbar ist.

Vorzugsweise wird der quadratische Spline anhand der drei angegebenen Punkte konstruiert.

Der Spline kann im CIE u'v' Farbraum zum Beispiel wie folgt gegeben sein:

```
Spline(t) = Tu * (1-t)^2 + P * t * (1-t) + S * t^2, wobei
t aus [0;1];
```

Damit hat die erweiterte Planckkurve am Ursprung, t=0, den Wert Tu und an ihrem Endpunkt, t=1, den Wert S.

Die Lage der Punkte im Farbraum, also der Farbort und die Koordinaten der Punkte im Farbraum, hängen von der Wahl des Farbraumsystems ab. Die Punkte können jedoch in jedem Farbraumsystem eindeutig angegeben werden, sodass das hier beschriebene Verfahren zur Klasseneinteilung von strahlungsemittierenden, optoelektronischen Halbleiterbauelementen farbraumunabhängig ist. Die Unterteilung in Farbortbereiche hängt dann lediglich von der Planckkurve und ihrer durch die angegebenen Konstruktionspunkte physikalisch motivierten Fortsetzung in den Bereich blauer Farborte ab.

Gemäß zumindest einer Ausführungsform des Verfahrens wird jedem Farbortbereich aus der Gruppe von Farbortbereichen eine Adresse zugeordnet. Die Adresse weist dabei einen ersten Parameter auf, der die Pfadlänge oder den Abstand des Farbortbereichs entlang der zusammengesetzten Kurve vom Hochtemperatur-Endpunkt der Planckkurve angibt. Das heißt, der erste Parameter wird entlang der zusammengesetzten Kurve gemessen. Dabei wird die tatsächliche Länge des entsprechenden Bereichs der zusammengesetzten Kurve bestimmt.

Die Adresse weist ferner einen zweiten Parameter auf, der die Pfadlänge oder den Abstand des Farbortbereichs von der zusammengesetzten Kurve entlang einer Judd-Linie angibt. Die Konstruktion der Judd-Linien wird dabei mit der gleichen Konstruktionsvorschrift wie für die Planckkurve und für die erweiterte Planckkurve fortgesetzt. Beispielsweise stehen diese Linien bei der Verwendung des CIE 1960 (uv) Farbraums senkrecht auf der zusammengesetzten Kurve, also sowohl auf der Planckkurve als auch auf der erweiterten Planckkurve. Ausgehend und entlang der zusammengesetzten Kurve sowie entlang der Judd-Linien kann der gesamte Farbraum erschlossen und adressiert werden.

Aufgrund der Tatsache, dass die Klasseneinteilung lediglich auf der zusammengesetzten Kurve aus Planckkurve und erweiterter Planckkurve aufbaut, lässt sich das Verfahren zur Klasseneinteilung auf alle bekannten und möglichen Farbraumsysteme transformieren und damit auch an eventuelle Neuerungen beispielsweise seitens der CIE und anderer Normierungsgremien anpassen.

Gemäß zumindest einer Ausführungsform des Verfahrens wird die Größe eines jeden Farbortbereichs aus der Gruppe von Farbortbereichen derart gewählt, dass ein Betrachter für Farben aus demselben Farbortbereich keinen Unterschied wahrnimmt.

Das heißt, die Unterteilung in einzelne Farbortbereiche wird derart vorgenommen, dass Farborte, die beim Betrachter die gleiche Farbwahrnehmung hervorrufen, im selben Farbortbereich liegen.

Die Größe eines jeden Farbortbereichs wird dabei vorzugsweise so gewählt, dass sie höchstens der Ausdehnung einer 3-step MacAdam Ellipse entspricht. Besonders bevorzugt entspricht die Größe eines jeden Farbortbereichs aus der Gruppe von Farbortbereichen in etwa oder höchstens einer 1-step MacAdam Ellipse.

Dies kann beispielsweise dadurch erreicht werden, dass die Erstreckung eines jeden Farbortbereichs aus der Gruppe von Farbortbereichen entlang der zusammengesetzten Kurve wenigstens 0,001 und höchstens 0,005 im CIE u'v' Farbraum beträgt. Ferner beträgt dann die Erstreckung eines jeden Farbortbereichs aus der Gruppe von Farbortbereichen entlang der Judd-Linien wenigstens 0,001 und höchstens 0,005 im CIE u'v' Farbraum. Beispielsweise wird die Erstreckung in beide Richtungen mit 0,002 im CIE u'v' Farbraum gewählt.

Diese Angaben können in andere Farbräume transformiert werden. Die Wahl der Erstreckung stellt dabei den einzigen freien Parameter dar. Wobei vorliegend der Parameter dahingehend physikalisch sinnvoll gewählt ist, dass die derart aufgespannten Farbortbereiche aus der Gruppe von Farbortbereichen eine Größe aufweisen, die in etwa einer 1-step MacAdam Ellipse entspricht.

Gemäß zumindest einer Ausführungsform des Verfahrens können die Informationen zum vorgegebenen Farbortbereich, das heißt die Klasse, in die das strahlungsemittierende, optoelektronische Halbleiterbauelement eingeteilt ist, in einer Speichereinheit abgelegt werden, die beispielsweise auf einem Modulträger für das strahlungsemittierende, optoelektronische Halbleiterbauelement befestigt und gegebenenfalls elektrisch angeschlossen ist.

Bei dem Modulträger kann es sich beispielsweise um eine Leiterplatte wie etwa eine bedruckte Leiterplatte oder eine Metallkernplatine handeln, auf welcher auch das strahlungsemittierende, optoelektronische Halbleiterbauelement befestigt und elektrisch angeschlossen ist.

Im Folgenden wird das hier beschriebene Verfahren zur Klasseneinteilung von strahlungsemittierenden, optoelektronischen Halbleiterbauelementen anhand von Ausführungsbeispielen und den dazugehörigen Figuren näher erläutert.

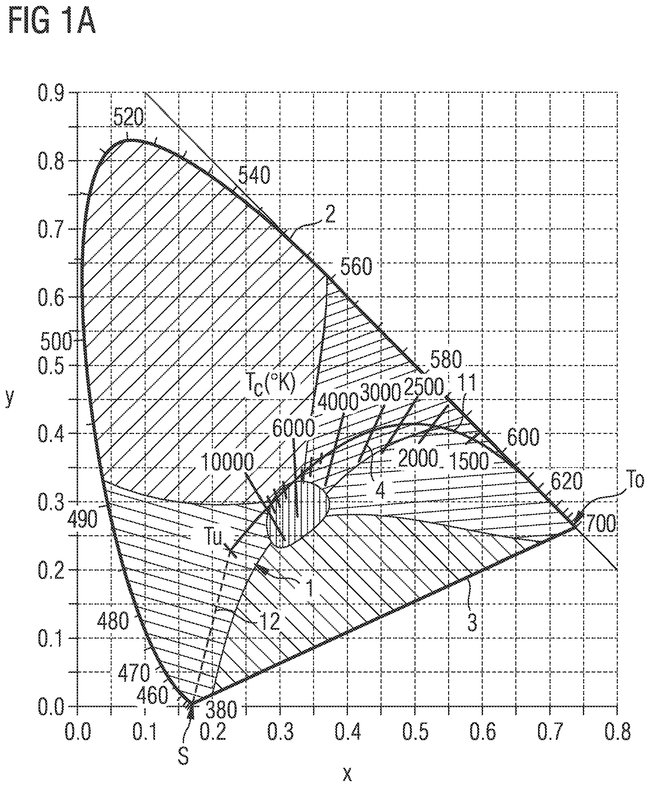

Anhand der Figuren 1A, 1B, 2A, 2B, 2C, 3 ist das hier beschriebene Verfahren näher erläutert.

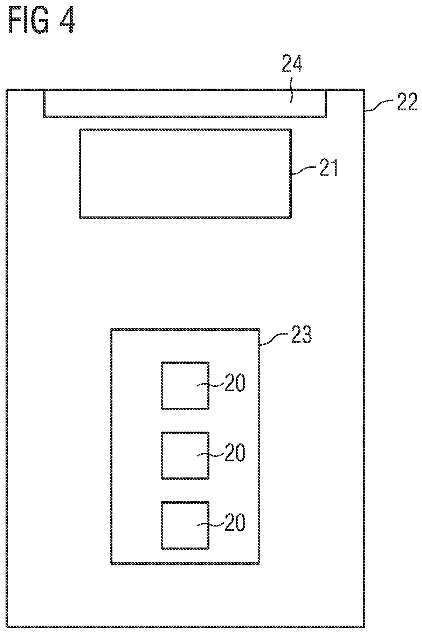

Anhand der schematischen Draufsicht der Figur 4 ist ein optoelektronisches Halbleiterbauteil mit mittels des Verfahrens klassifizierten, strahlungsemittierenden, optoelektronischen Halbleiterbauelementen näher erläutert.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

Die Figur 1A zeigt eine grafische Auftragung des CIE-XY-Farbraums. Der hufeisenförmige Farbraum ist von der Spektralfarblinie 2 nach oben hin eingefasst und nach unten hin von der Purpurlinie 3 abgeschlossen. In den Farbraum ist die Planckkurve 11 eingezeichnet, die von den Judd-Linien 4 (Isotherme) geschnitten wird. Die Planckkurve 11 erstreckt sich vom Punkt T0 bei einer Temperatur von 0 K zum Punkt Tu für eine Temperatur, die gegen unendlich geht. Die Planckkurve 11 endet im bläulichweißen Farbortbereich.

Vorliegend ist die Planckkurve 11 zur zusammengesetzten Kurve 1 erweitert.

Dazu schließt sich der Planckkurve 11 am Hochtemperatur-Endpunkt Tu die erweiterte Planckkurve 12 an. Die zusammengesetzte Kurve 1 ist dabei im Punkt Tu vorzugsweise zumindest einmal stetig differenzierbar. Die erweiterte Planckkurve 12 erstreckt sich vom Hochtemperatur-Endpunkt Tu zum Punkt S bei einer Wellenlänge von 380 nm. Vorliegend ist der Punkt S der Schnittpunkt der Spektralfarblinie 2 mit der Purpurlinie 3.

Wie oben beschrieben, beziehen sich herkömmliche Verfahren zur Klasseneinteilung, beispielsweise von Leuchtdioden, lediglich auf Farborte, denen eine Farbtemperatur oder mittels der Judd-Linien 4 eine korrelierte Farbtemperatur zugeordnet werden kann. Andere Farborte, wie beispielsweise blaue Farbortbereiche, werden nun über die zusammengesetzte Kurve 1 einer Klasseneinteilung zugänglich.

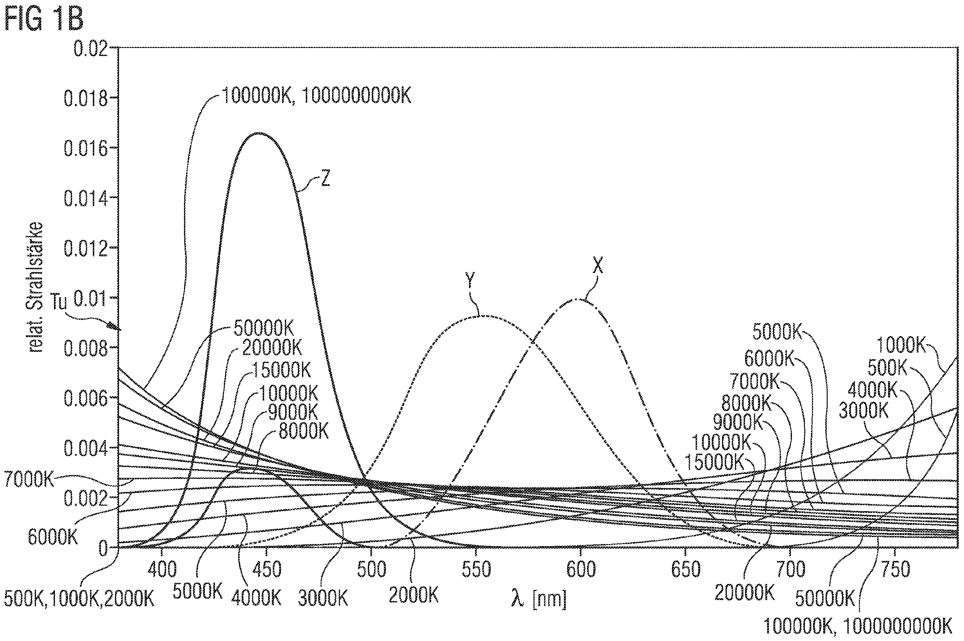

In der Figur 1B sind die Spektren schwarzer Strahler für unterschiedliche Farbtemperaturen aufgetragen. Dabei ist ersichtlich, dass die Kurven für eine Farbtemperatur gegen unendlich, also beim Punkt Tu, konvergieren. Für eine Temperatur T gegen 0 ergibt sich ein starker exponentieller Anstieg und der Wert der "color matching functions" X, Y, Z geht für Wellenlängen > 800 nm gegen 0.

Vorliegend wird der Hochtemperatur-Endpunkt Tu als Ausgangspunkt für den Aufbau eines krummlinigen Koordinatensystems gewählt. Der Hochtemperatur-Endpunkt Tu bildet also den Nullpunkt oder Ursprung des Koordinatensystems. Der Hochtemperatur-Endpunkt Tu hat dabei den Vorteil, dass er unabhängig davon ist, ob und durch welche Materie das Licht tritt. Er ist insbesondere der gleiche für die Planckkurve im Vakuum und an Luft.

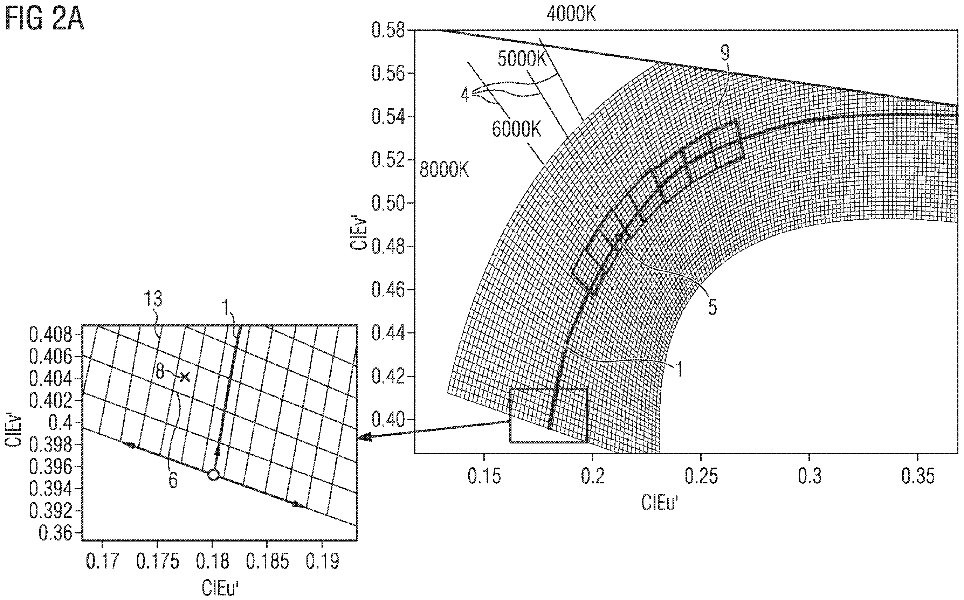

Anhand der grafischen Auftragung der Figur 2A ist nun das hier beschriebene Verfahren zur Klasseneinteilung näher erläutert. Die Figur 2A zeigt die zusammengesetzte Kurve 1. Durch die zusammengesetzte Kurve 1 und die Parallelen 13 zur zusammengesetzten Kurve 1 sowie durch die Judd-Linien 4 wird ein Raum aufgespannt, der durch die beiden gezeigten Parameter p, die Pfadlänge auf der zusammengesetzten Kurve 1, und j, die Pfadlänge auf einer Judd-Linie 4, parametrisiert werden kann.

Die Pfadlängen p, j werden dabei in ihrer Größe vorzugsweise so gewählt, dass ein durch sie aufgespannter vorgegebener Farbortbereich 6 (also eine Klasse, in die der Farbort 8 eines strahlungsemittierenden, optoelektronischen Halbleiterbauelements 20 eingeteilt werden kann) eine Größe aufweist, die in etwa einer 1-step MacAdam Ellipse 5 entspricht. Schwankungen des Farbortes 8 innerhalb eines vorgegebenen Farbortbereichs 6 sind dann durch den Betrachter nicht wahrnehmbar.

Im CIE u'v' Farbraum, in dem die MacAdam Ellipse annähernd ein Kreis ist, werden p und j beispielsweise dafür zu p = 0,002 und j = 0,002 gewählt. Eine Transformation dieser Pfadlängen in andere Farbräume ist möglich.

In der Figur 2A sind auch die ANSI-Klassen 9 gezeigt. Es ist ersichtlich, dass diese Klassen 9 unterschiedliche Größen aufweisen bezüglich der Planckkurve 11 nicht zentriert sind. Ferner ist eine Klasseneinteilung nur in einem eingeschränkten Bereich des Farbraums möglich.

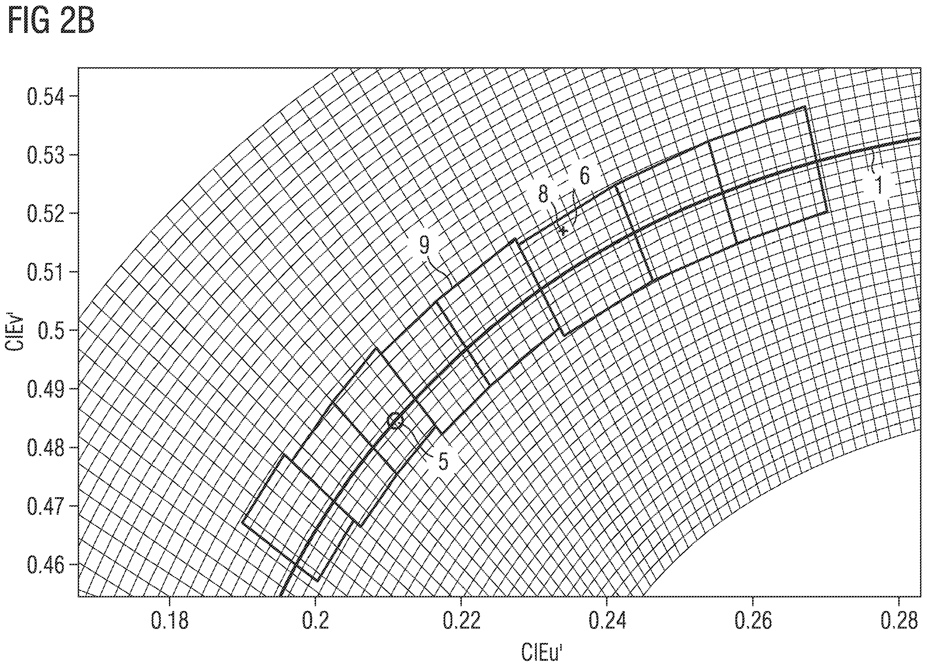

Die Figur 2B zeigt einen vergrößerten Ausschnitt des CIE u'v' Farbraums mit zusammengesetzter Kurve 1.

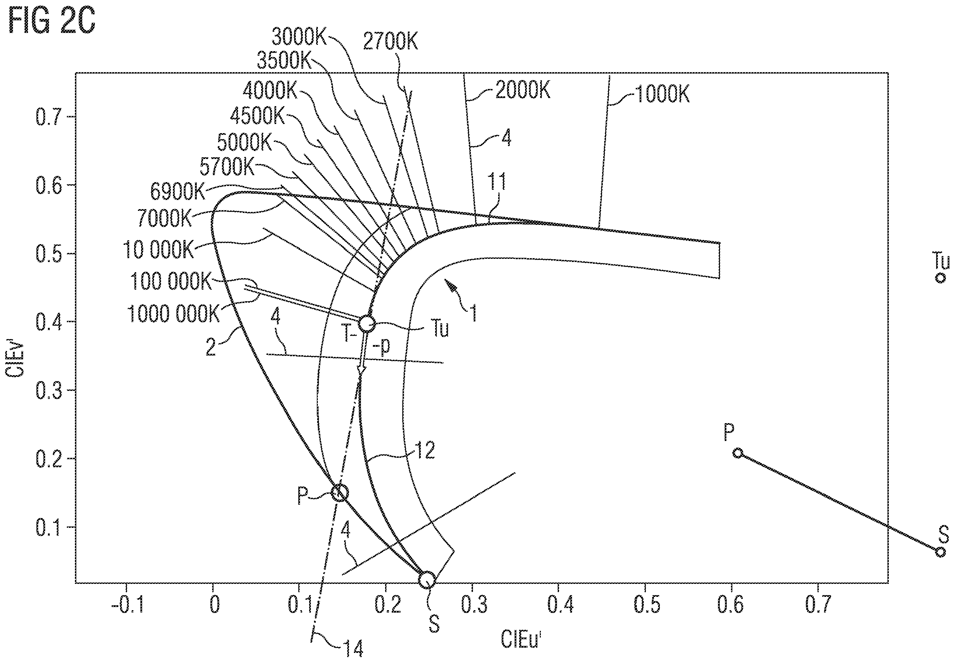

Anhand der grafischen Auftragung der Figur 2C ist die Konstruktion der erweiterten Planckkurve 12 näher beschrieben. Die erweiterte Planckkurve 12 ist mittels der Konstruktionspunkte Tu, P, S im CIE u'v' Farbraum als Bezier-Spline konstruiert, wie er weiter oben angegeben ist. Das heißt, der Spline kann im CIE u'v' Farbraum zum Beispiel wie folgt gegeben sein:

```
Spline(t) = Tu * (1-t)^2 + P * t * (1-t) + S * t^2, wobei
t aus [0;1];
```

Der erste Konstruktionspunkt ist der Hochtemperatur-Endpunkt Tu der Planckkurve 11, der im CIE u'v' Farbraum die Koordinaten u'=0,1801; v'=0,3953 aufweist.

Der zweite Konstruktionspunkt S ist hier der Punkt, bei dem das Licht auf der Spektralfarblinie 2 eine Wellenlänge von 380 nm aufweist. Der Punkt S weist folgende Koordinaten auf: u' = 0,2568, v' = 0,0165.

Als dritter Konstruktionspunkt P wird hier der Schnittpunkt der Spektralfarblinie 2 mit der Tangente 14 im Hochtemperatur-Endpunkt Tu gewählt. Die Koordinaten des Punkt Ps sind u' = 0,1412, v' = 0,1559.

Die Wahl dieser Konstruktionspunkte ist unabhängig vom verwendeten Farbraumsystem und eignet sich daher besonders gut zur Fortsetzung der Planckkurve 11. Es sind jedoch auch andere, sinnvolle Fortsetzungen der Planckkurve denkbar. Das hier beschriebene Verfahren zur Klasseneinteilung lässt sich auch auf andere zusammengesetzte Kurven anwenden.

In der Figur 2C sind auch Judd-Linien 4 eingezeichnet, die im CIE-(u, v) Farbraum senkrecht auf der zusammengesetzten Kurve stehen. Im transformierten u'- v'-Farbraum ist diese Orthogonalität nicht mehr vorhanden.

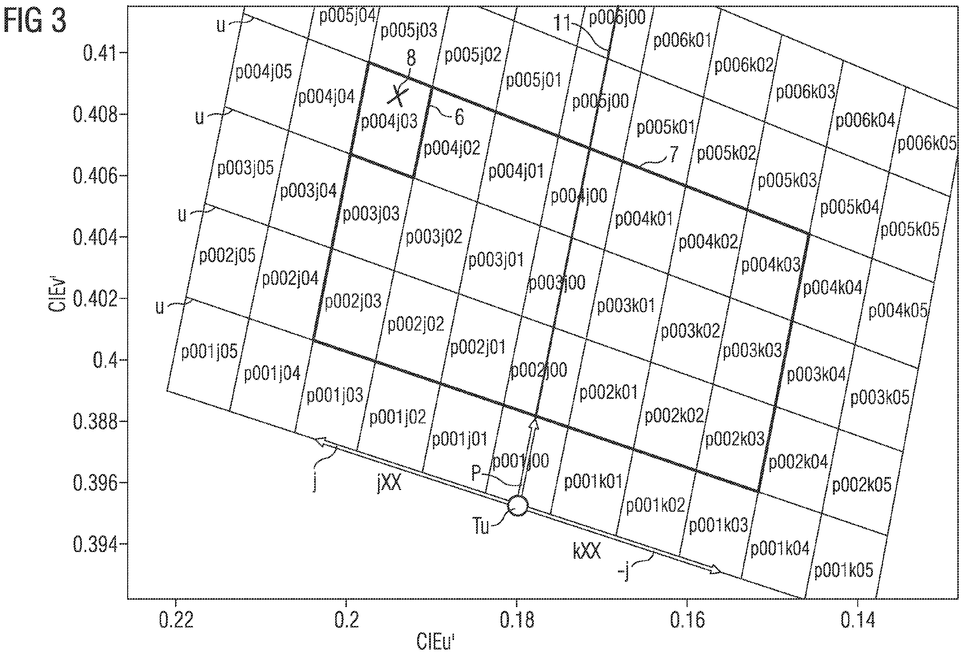

Anhand der Figur 3 ist die Adressierung eines vorgegebenen Farbortbereichs näher erläutert. Der Adressraum der vorgegebenen Farbortbereiche wird, wie oben erläutert, durch die Pfadlängen p und j aufgespannt.

Vorliegend wird folgende Nomenklatur gewählt: Entlang der Planckkurve 11 werden die Pfadlängen p vom Hochtemperatur-Endpunkt Tu weg positiv gerechnet und mit pXXX durchgezählt, wobei X bei 1 startet.

Entlang der erweiterten Planckkurve 12 werden die Abstände mit nXXX durchnummeriert.

Entsprechend werden die Abstände entlang der Judd-Linien 4 mit jXX oberhalb der zusammengesetzten Kurve 1 und kXX unterhalb der zusammengesetzten Kurve 1 durchgezählt.

Der eingezeichnete vorgegebene Farbortbereich 6, in dem sich der Farbort 8 des strahlungsemittierenden Halbleiterbauelements befindet, weist daher eine Adresse p004j03 auf. Der vorgegebene Farbortbereich 6 befindet sich in einer größeren Gruppe 7 von mehreren Farbortbereichen, deren Adressraum wie folgt angegeben werden kann: p002k03-p004j03.

Das heißt, das hier beschriebene Verfahren zur Klassifizierung von strahlungsemittierenden, optoelektronischen Halbleiterbauelementen ermöglicht nicht nur eine Aufteilung eines beliebigen Farbraums in vorgegebene Farbortbereiche, sondern auch eine konsistente Adressierung eines jeden Farbortbereichs, also einer jeden Klasse. Somit kann durch eine eindeutige Nomenklatur ein einzelner Farbortbereich 6 oder eine Kombination von Farbortbereichen 7 angegeben werden.

Die Figur 4 zeigt in einer schematischen Draufsicht ein optoelektronisches Halbleiterbauteil mit einem Modulträger 22. Bei dem Modulträger 22 handelt es sich beispielsweise um eine Leiterplatte, wie eine Metallkernplatine oder eine bedruckte Leiterplatte. Auf dem Modulträger 22 ist ein Gehäuse 23, zum Beispiel ein Keramikträger, aufgebracht, der drei strahlungsemittierende, optoelektronische Halbleiterbauelemente 20, zum Beispiel Leuchtdiodenchips, trägt.

Die Halbleiterbauelemente 20 sind jeweils mit einem hier beschriebenen Verfahren in einen vorgegebenen Farbortbereich eingeteilt. Beispielsweise weist das von den Halbleiterbauelementen 20 im Betrieb emittierte Licht jeweils einen Farbort auf, der in dieselbe Klasse fällt.

Die Messwerte, die an den Halbleiterbauelementen 20 ermittelt worden sind, das heißt beispielsweise die Adressen der vorgegebenen Farbortbereiche, in dem die Halbleiterbauelemente 20 eingeteilt sind, sind in einer elektronischen Speichereinheit 21 abgelegt, die ebenfalls auf dem Modulträger 22 befestigt ist und elektrisch angeschlossen ist. Das Bauteil kann über eine Anschlussstelle 24 von außen kontaktiert werden. Über die Anschlussstelle 24 kann auch die Farbortinformation aus der Speichereinheit 21 ausgelesen werden.

Insgesamt ist hier ein besonders flexibles Verfahren zur Klasseneinteilung von strahlungsemittierenden Halbleiterbauelementen angegeben. Das Verfahren kann an verschiedene Farbraumsysteme angepasst werden. Ferner kann das Verfahren unabhängig davon durchgeführt werden, ob die Planckkurve im Vakuum oder in Luft bestimmt wird. Darüber hinaus ist es möglich, dieses Verfahren auch auf andere Licht erzeugende Bauteile, wie Fluoreszenzlampen, Entladungslampen oder elektrolumineszierende Lampen, anzuwenden.

**Patentansprüche**

1. Verfahren zur Klasseneinteilung eines strahlungsemittierenden, optoelektronischen Halbleiterbauelements (20) mit den Schritten:

   - Bereitstellen eines strahlungsemittierenden, optoelektronischen Halbleiterbauelements (20),
   - Ermitteln des Farbortes (8) des vom strahlungsemittierenden, optoelektronischen Halbleiterbauelements (20) im Betrieb emittierten Lichts,
   - Einteilung des strahlungsemittierenden, optoelektronischen Halbleiterbauelements (20) in einen vorgegebenen Farbortbereich (6), der den ermittelten Farbort umfasst, wobei
   - der vorgegebene Farbortbereich (6) aus einer Gruppe (7) von Farbortbereichen ausgewählt wird und zumindest einer der Farbortbereiche aus der Gruppe von Farbortbereichen einen blauen Farbort umfasst und/oder einen Farbort umfasst, dem keine korrelierte Farbtemperatur zugeordnet werden kann, wobei
   - zumindest einer der Farbortbereiche aus der Gruppe (7) von Farbortbereichen von einer erweiterten Planckkurve (12) geschnitten wird oder an die erweiterte Planckkurve (12) grenzt, welche die Planckkurve (11) an ihrem Hochtemperatur-Endpunkt (Tu) fortsetzt und mit der Planckkurve (11) eine zusammengesetzte Kurve (1) bildet,

- die erweiterte Planckkurve (12) die Planckkurve (11) an ihrem Hochtemperatur-Endpunkt (Tu) zumindest einmal stetig differenzierbar fortsetzt,

- jedem Farbortbereich aus der Gruppe (7) von Farbortbereichen eine Adresse zugeordnet wird,

- die Adresse einen ersten Parameter (p) aufweist, der den Abstand des Farbortbereichs entlang der zusammengesetzten Kurve (1) vom Hochtemperatur-Endpunkt (Tu) der Planckkurve (12) angibt,

- die Adresse einen zweiten Parameter (j) aufweist, der den Abstand des Farbortbereichs von der zusammengesetzten Kurve (1) entlang einer Judd-Linie (4) angibt, und

- die Größe eines jeden Farbortbereiches aus der Gruppe (7) von Farbortbereichen derart gewählt wird, dass ein Betrachter für Farben aus demselben Farbortbereich keinen Unterschied wahrnimmt.

2. Verfahren gemäß dem vorherigen Anspruch,
wobei die erweiterte Planckkurve (12) im CIE u'v' Farbraum ein zumindest quadratischer Spline ist.

3. Verfahren gemäß dem vorherigen Anspruch,
wobei die erweiterte Planckkurve (12) im CIE u'v' Farbraum ein quadratischer Bezier-Spline ist.

4. Verfahren gemäß einem der Ansprüche 2 und 3,
wobei ein Punkt (Tu) zur Konstruktion des Splines der Hochtemperatur-Endpunkt des Planckkurve (11) ist.

5. Verfahren gemäß einem der Ansprüche 2 bis 4,
wobei ein Punkt (P) zur Konstruktion des Splines ein Punkt auf der Tangente (14) an die Planckkurve (12) am Hochtemperatur-Endpunkt (Tu) ist.

6. Verfahren gemäß einem der Ansprüche 2 bis 5,
wobei ein Punkt (S) zur Konstruktion des Splines auf der Spektralfarblinie (2) liegt.

7. Verfahren gemäß einem der vorherigen Ansprüche,
wobei die Größe eines jeden Farbortbereiches aus der Gruppe (7) von Farbortbereichen höchstens einer 3-step MacAdam Ellipse entspricht.

8. Verfahren gemäß einem der vorherigen Ansprüche,
wobei die Größe eines jeden Farbortbereiches aus der Gruppe (7) von Farbortbereichen in etwa gleich oder gleich einer 1-step MacAdam Ellipse (5) entspricht.

9. Verfahren gemäß einem der vorherigen Ansprüche,
wobei die Erstreckung (p) eines jeden Farbortbereiches aus der Gruppe (7) von Farbortbereichen entlang der zusammengesetzten Kurve gemessen wenigstens 0,001 und höchstens 0,005 im CIE u'v' Farbraum beträgt.

10. Verfahren gemäß einem der vorherigen Ansprüche,
wobei die Erstreckung (j) eines jeden Farbortbereiches aus der Gruppe (7) von Farbortbereichen entlang einer Judd-Linie (4) gemessen wenigstens 0,001 und höchstens 0,005 im CIE u'v' Farbraum beträgt.

**Claims**

1. Method of the binning of a radiation emitting optoelectronic semiconductor device (20) comprising the steps of:

- providing a radiation emitting optoelectronic semiconductor device (20),

- determining the color locus (8) of the light emitted by the radiation-emitting optoelectronic semiconductor device (20) during operation,

- classifying the radiation-emitting optoelectronic semiconductor component (20) into a predetermined color locus range (6), which comprises the determined color locus, wherein

- the predetermined color locus range (6) is selected from a group (7) of color locus ranges and at least one of the color locus ranges from the group of color locus ranges comprises a blue color locus and/or comprises a color locus to which no correlated color temperature can be assigned, wherein

- at least one of the color locus ranges from the group (7) of color locus ranges is intersected by an extended Planck curve (12) or adjoins the extended Planck curve (12), which continues the Planck curve (11) at its high temperature end point (Tu) and forms a composite curve (1) with the Planck curve (11),

- the extended Planck curve (12) continues the Planck curve (11) at its high temperature end point (Tu) in an at least once continuously differentiable manner,
- an address is assigned to each color locus range from the group (7) of color locus ranges,
- the address has a first parameter (p) indicating the distance of the color locus range along the composite curve (1) from the high temperature end point (Tu) of the Planck curve (12),
- the address has a second parameter (j) indicating the distance of the color locus range from the composite curve (1) along a Judd line (4), and
- the size of each color locus range from the group (7) of color locus ranges is selected such that an observer perceives no difference for colors from the same color locus range.

2. Method according to the previous claim,
   wherein the expanded Planck curve (12), in the CIE u'v' color space, is an at least quadratic spline.

3. Method according to the previous claim,
   wherein the expanded Planck curve (12), in the CIE u'v' color space, is a quadratic Bezier spline.

4. Method according to one of the claims 2 and 3,
   wherein a point (Tu) for constructing the spline is the high temperature end point of the Planck curve (11).

5. Method according to one of the claims 2 to 4,
   wherein a point (P) for constructing the spline is a point on the tangent (14) to the Planck curve (12) at the high temperature end point (Tu).

6. Method according to one of the claims 2 to 5,
   wherein a point (S) for constructing the spline lies on the spectral color line (2).

7. Method according to one of the previous claims,
   wherein the size of each color locus range from the group (7) of color locus ranges corresponds at most to a 3-step MacAdam ellipse.

8. Method according to one of the previous claims,
   wherein the size of each color locus range from the group (7) of color locus ranges corresponds approximately identically or identically to a 1-step MacAdam ellipse (5).

9. Method according to one of the previous claims,
   wherein the extent (p) of each color locus range from the group (7) of color locus ranges measured along the composite curve is at least 0.001 and at most 0.005 in the CIE u'v' color space.

10. Method according to one of the previous claims,
    wherein the extent (j) of each color locus range from the group (7) of color locus ranges measured along a Judd line (4) is at least 0.001 and at most 0.005 in the CIE u'v' color space.

**Revendications**

1. Procédé de classification d'un composant semi-conducteur optoélectronique émetteur de rayonnement (20), comportant les étapes suivantes:

   - mise à disposition d'un composant semi-conducteur optoélectronique émetteur de rayonnement (20),
   - détermination du lieu de couleur (8) de la lumière émise par le composant semi-conducteur optoélectronique émetteur de rayonnement (20) pendant le fonctionnement,
   - classement du composant semi-conducteur optoélectronique émetteur de rayonnement (20) dans une zone de lieux de couleur prédéterminée(6) comprenant le lieu de couleur déterminé, dans lequel
   - la zone de lieux de couleur prédéterminée (6) est choisie dans un groupe (7) de zones de lieux de couleur et au moins une des zones de lieux de couleur du groupe de zones de lieux de couleur comprend un lieu de couleur bleu et/ou un lieu de couleur auquel aucune température de couleur corrélée ne peut être attribuée, dans lequel

- au moins l'une des zones de lieux de couleur du groupe (7) de zones de lieux de couleur est coupée par une courbe de Planck (12) étendue ou jouxte la courbe de Planck étendue (12) qui prolonge la courbe de Planck (11) à son point final de haute température (Tu) et forme une courbe composée (1) avec la courbe de Planck (11),

- la courbe de Planck étendue (12) prolonge la courbe de Planck (11) à son point final de haute température (Tu) au moins une fois en continu de manière différenciable,

- une adresse est attribuée à chaque zone de lieux de couleur du groupe (7) de zones de lieux de couleur,

- l'adresse comprend un premier paramètre (p) qui indique la distance de la zone de lieux de couleur le long de la courbe composée (1) du point final de haute température (Tu) de la courbe de Planck (12),

- l'adresse comprend un second paramètre (j) indiquant la distance de la zone de lieux de couleur de la courbe composée (1) le long d'une ligne de Judd (4), et

- la taille de chaque zone de lieux de couleur du groupe (7) de zones de lieux de couleur est choisie de sorte qu'un observateur ne perçoive aucune différence pour les couleurs provenant de la même zone de lieux de couleur.

2. Procédé selon la revendication précédente,
dans lequel la courbe de Planck (12) dans l'espace colorimétrique CIE u'v' est une spline au moins carrée.

3. Procédé selon la revendication précédente,
dans lequel la courbe de Planck (12) dans l'espace colorimétrique CIE u'v' est une spline Bézier carrée.

4. Procédé selon l'une des revendications 2 et 3,
dans lequel un point (Tu) pour construire la spline est le point final de haute température de la courbe de Planck (11).

5. Procédé selon l'une des revendications 2 à 4,
dans lequel un point (P) pour construire la spline est un point situé sur la tangente (14) qui touche la courbe de Planck (12) au point final de haute température (Tu).

6. Procédé selon l'une des revendications 2 à 5,
dans lequel un point (S) pour construire la spline se trouve sur la ligne de couleur spectrale (2).

7. Procédé selon l'une des revendications précédentes,
dans lequel la taille de chaque zone de lieux de couleur du groupe (7) de zones de lieux de couleur correspond au maximum à une ellipse de MacAdam 3-step.

8. Procédé selon l'une des revendications précédentes,
dans lequel la taille de chaque zone de lieux de couleur du groupe (7) de zones de lieux de couleur (5) est à peu près égale ou égale à une ellipse de MacAdam 1-step (5).

9. Procédé selon l'une des revendications précédentes,
dans lequel l'étendue (p) de chaque zone de lieux de couleur du groupe (7) de zones de lieux de couleur mesurée le long de la courbe composée est d'au moins 0,001 et d'au plus 0,005 dans l'espace de couleurs CIE u'v'.

10. Procédé selon l'une des revendications précédentes,
dans lequel l'étendue (j) de chaque zone de lieux de couleur du groupe (7) de zones de lieux de couleur mesurée le long d'une ligne de Judd (4) est d'au moins 0,001 et d'au plus 0,005 dans l'espace de couleurs CIE u'v'.

# FIG 1A

FIG 1B

EP 2 507 600 B1

EP 2 507 600 B1

FIG 2A

# FIG 2B

EP 2 507 600 B1

FIG 2C

EP 2 507 600 B1

FIG 3

EP 2 507 600 B1

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6900471 B1